# EUROPEAN PATENT APPLICATION

(11) **EP 4 083 619 A1**
(43) Date of publication of application: **02.11.2022**
(21) Application number: 21809263.3
(22) Date of filing: 29.03.2021
(51) Int. Cl.: G01N 30/02, G01N 30/86

(54) **METABOLOMICS RELATIVE QUANTITATIVE ANALYSIS METHOD BASED ON UPLC/HMRS**

(30) Priority: 20.05.2020 CN 202010429597
(71) Applicant: Suzhou Bionovogene Biomedical Tech Co., Ltd, Suzhou, Jiangsu 215000 (CN)
(72) Inventor: XU, Ying, Suzhou, Jiangsu 215000 (CN); REN, Jianhong, Suzhou, Jiangsu 215000 (CN); XIE, Guigang, Suzhou, Jiangsu 215000 (CN); DAI, Zhenli, Suzhou, Jiangsu 215000 (CN); GU, Mengnan, Suzhou, Jiangsu 215000 (CN); GU, Congshun, Suzhou, Jiangsu 215000 (CN)
(74) Representative: Engelhard, Markus
(86) International application number: PCT/CN2021/083495
(87) International publication number: WO 2021/232943

(57) **Abstract**

The present invention belongs to the technical field of metabolomics, and relates to a metabolomics relative quantitative analysis method based on UPLC/HRMS. Specifically, the present method mainly comprises the steps of formulating an isotope internal standard mixed solution, a standard curve correction solution, and a metabolomics sample solution; acquiring raw mass spectrum data of the standard curve correction solution and the metabolomics sample solution; transposing and deconvolving the raw data; identifying and selecting the optimal isotope internal standard; fitting a linear equation and calculating the relative quantitative results of metabolites in the metabolomics sample solution; and completing the structural identification of metabolites and differential metabolites in the metabolomics sample solution. The method can meet both qualitative and quantitative requirements using only a high-resolution mass spectrometry platform; and the quantitative results are accurate, and the accuracy of the qualitative results are higher, having low costs, simple operation, and wide applicability.

## Description

### Technical Field

The present invention belongs to the technical field of metabolomics, and relates to a UPLC/HRMS-based method for relative quantitative detection of small molecule metabolites using isotope internal standards.

### Background Art

Metabolomics studies all metabolic responses of biological systems after being stimulated by exogenous substances, or affected by factors such as environmental changes or genetic modifications, and detects the overall picture and dynamic changes of metabolic responses. The research subjects are generally small molecule metabolites with a relative molecular mass of less than 1000. Metabolomics is characterized by high-throughput, large-scale experimental methods combined with pattern recognition, expert systems and other computing systems, and qualitative and quantitative analysis of all metabolites in organisms can be achieved. Metabolomics is an important part of systems biology.

According to different research purposes, metabolomics can be divided into four levels: metabolite target analysis, metabolic profiling analysis, metabolic fingerprint analysis and metabonomics, wherein metabolite target analysis and metabolic profiling analysis are used to quantitatively detect a certain characteristic metabolite or a certain type of characteristic metabolites, metabolic fingerprint analysis is used to qualitatively or semi-quantitatively analyze all metabolites, and metabonomics is used to quantitatively analyze all metabolites, but the last level has not yet been achieved.

In view of the fact that the research methods of metabolomics are mainly qualitative and quantitative analysis of metabolites, the detection methods thereof are mainly the current mainstream techniques in the field of chemical analysis, including nuclear magnetic resonance (NMR), mass spectrometry (MS), high performance liquid chromatography (HPLC), ultra-high performance liquid chromatography (UPLC), *etc.* The advantage of nuclear magnetic detection technique is that the sample does not require complicated pretreatment, and non-invasive detection of samples and unbiased detection of metabolite types can be achieved, while the disadvantages are that the sensitivity is relatively low, the dynamic range is limited, and the nuclear magnetic detection technique has difficulty in determining the substances with low content or large differences in concentration simultaneously, compared with the mass spectrometry detection technique. In addition, nuclear magnetic detection technique is currently favored for qualitative research, and is suitable for identifying unknown metabolites. The mass spectrometry detection technique has a relatively high detection sensitivity, and when used in combination with the chromatography technique, the metabolites in the complex samples can be separated by chromatography and then detected by mass spectrometry, which reduces the interference of the matrix and is beneficial to the detection of trace metabolites.

Mass spectrometry detection technique relies on the ionization of metabolites in the ion source to generate charged ions with different mass-to-charge ratios, which are separated and focused on the mass analyzer to acquire a mass spectrum. According to the different chromatographic instruments used in combination, chromatography-mass spectrometry techniques can be divided into gas chromatography-mass spectrometry (GC-MS), liquid chromatography-mass spectrometry (LC-MS) and capillary electrophoresis-mass spectrometry (CE-MS), *etc.* Gas chromatography-mass spectrometry technique is suitable for the analysis of metabolites with a low polarity, a high volatility and a relatively good thermal stability, derivatization pretreatment is required for metabolites with a relatively low volatility, and the derivatization process is greatly affected by moisture factors and has difficulty in reflecting the real situation of metabolites in biological samples. Liquid chromatography-mass spectrometry technique is suitable for the analysis of metabolites with a moderate or high polarity, a moderate to low volatility or no volatility, and a poor thermal stability. According to different mass spectrometry detectors, Gas chromatography-mass spectrometry technique can be divided into quadrupole detectors (single quadrupole and triple quadrupole) and high-resolution detectors (time of flight/TOF, orbital ion trap/Orbitrap and Fourier transform ion cyclotron resonance/FTICR), quadrupole mass spectrometry is suitable for the quantitative detection of metabolites, and high-resolution mass spectrometry is suitable for the qualitative analysis of metabolites. Since mass spectrometry detection technique has a clear bias towards the chemical properties of metabolites, it is difficult to use a single detection method to simultaneously complete qualitative and quantitative analysis, and multi-platform complementary analysis is required to comprehensively investigate the changes of metabolites.

Due to the above-mentioned technical deficiencies, currently a qualitative or quantitative metabolomics detection method can only be performed based on a single platform. For example, a GC-MS platform is used to detect fatty acids, *etc.,* in biological samples, an LC-MS/MS platform is used to develop detection methods for targeted metabolites (including bile acids, amino acids and neurotransmitters, *etc.*), and a high-resolution mass spectrometry platform is used to identify the structure of metabolites. Therefore, comprehensive, high-throughput and high-sensitive simultaneous qualitative and quantitative analysis of metabolites in biological samples is still an urgent challenge for metabolomics research.

Chinese invention patent application CN 104297355 A discloses a pseudo-target metabolomics analysis method based on liquid chromatography/mass spectrometry, but this method still requires two mass spectrometry platforms (Q-TOF and QQQ) for relative quantitative analysis, and the concentration analysis results are calculated using the quality control serum (QC) of the current batch and preforming correction. Chen *et al.* discloses a data-independent targeted quantitative metabolomics detection method (DITQM), but this method is also based on both qualitative device and quantitative device. First, the ion pair information of metabolites is acquired by high-resolution mass spectrometry, then these ion pairs are input into triple quadrupole mass spectrometry, and the relative quantitative concentrations of metabolites are calculated using the quality control serum (QC) of the current batch as the calibration material (see Chen Y., Zhou Z., Yang W., et al., Development of a data-independent targeted metabolomics method for relative quantification using liquid chromatography coupled with tandem mass spectrometry [J], Anal. Chem., 2017, 89 (13): 6954-6962). Although the above-mentioned two detection methods solve the qualitative and quantitative problems to a certain extent, it is still necessary to simultaneously use two mass spectrometry platforms, and the quality control serum (QC) samples of respective laboratories are used as the samples for quantitative correction for the concentration calculation, which results in the concentration results measured by each laboratory are independent and incompatible with each other. It is especially important that the methods used as described above do not carry out structural identification (or annotation) of metabolites or differential metabolites, and it is not clear which metabolites have changed in concentration, so these methods are of little significance for metabolomics research, and do not fundamentally solve the technical problems in metabolomics for simultaneous qualitative and quantitative analysis.

### Summary of the Invention

### Problems to be solved by the present invention

In view of the above-mentioned technical problems, the purpose of the present invention is to establish a method that can realize simultaneous qualitative and relative quantitative analysis of metabolomics samples based on one platform.

### Solutions to solve the problems

The present invention provides a metabolomics relative quantitative analysis method based on UPLC/HRMS, comprising the following steps:
1) formulating an isotope internal standard mixed solution based on multiple isotope internal standards;
2) based on a metabolomics sample, determining a relative quantitative correction sample matching with the metabolomics sample, and formulating relative quantitative standard curve correction solutions in a series of concentration gradients by using the relative quantitative correction sample and the isotope internal standard mixed solution in step 1);
3) formulating a metabolomics sample solution by using the metabolomics sample in step 2) and the isotope internal standard mixed solution in step 1);
4) collecting the raw mass spectrometry data of the metabolomics sample solution in step 3) and the relative quantitative standard curve correction solutions in a series of concentration gradients in step 2) by using the UPLC/HRMS platform;
5) acquiring primary mass spectrum transposed data and secondary mass spectrum transposed data based on the raw mass spectrometry data in step 4), and acquiring deconvolution results comprising a variety of primary variable information based on the primary mass spectrum transposed data;
6) combining the deconvolution results of the primary mass spectrum transposed data and the secondary mass spectrum transposed data in step 5), and referring to the primary variable information and secondary variable information of single isotope internal standard to identify the isotope internal standard, and selecting the optimal isotope internal standard for linear fitting;
7) performing linear fitting by using concentrations of the relative quantitative standard curve correction solutions in a series of concentration gradients in step 2) and the primary variable information acquired in step 5) to acquire a linear equation;
8) based on the linear equation in step 7), acquiring the relative quantitative results of the metabolomics sample solution in step 3), and completing principal component analysis and differential metabolites analysis of the primary variable information; and
9) completing identification of metabolites and identification of differential metabolites by combining the deconvolution results of the primary mass spectrum transposed data with the secondary mass spectrum transposed data in step 5).

Preferably, in the above-mentioned method, the isotope internal standard mixed solution in step 1) is formulated by the following method: firstly taking an appropriate amount of multiple isotope internal standards, and adding a solvent thereto, respectively, to formulate a certain concentration of a mother solution of single isotope internal standard; and then taking an appropriate amount of each of the mother solutions of single isotope internal standard, respectively, mixing same, and adding a solvent thereto to acquire an isotope internal standard mixed solution.

Preferably, in the above-mentioned method, the metabolomics sample in step 2) is a serum or plasma sample, and the relative quantitative correction sample is NIST serum.

Preferably, in the above-mentioned method, the relative quantitative standard curve correction solutions in a series of concentration gradients in step 2) are formulated by the following method: taking a series of volumes of relative quantitative correction samples, adding an isotope internal standard and a protein precipitation reagent thereto, respectively, and mixing and centrifuging the mixture; taking the supernatant, and concentrating same; adding a reconstituted solvent to the residue, and mixing same; and taking the supernatant to acquire the relative quantitative standard curve correction solutions in a series of concentration gradients.

Preferably, in the above-mentioned method, the metabolomics sample solution in step 3) is formulated by the following method: taking a metabolomics sample, adding an isotope internal standard and a protein precipitation reagent thereto, respectively, and mixing and centrifuging the mixture; taking the supernatant, and concentrating same; adding a reconstituted solvent to the residue, and mixing same; and taking the supernatant to acquire the metabolomics sample solution.

Preferably, in the above-mentioned method, the primary mass spectrum transposed data and the secondary mass spectrum transposed data in step 5) are acquired by means of data transposition, and the data transposition is completed by a software or an algorithm platform.

Preferably, in the above-mentioned method, the deconvolution result in step 5) is acquired by means of deconvolution, and the deconvolution is completed by a software or an algorithm platform.

Preferably, in the above-mentioned method, the identification of the isotope internal standard in step 6) is completed by a self-developed algorithm.

Preferably, in the above-mentioned method, the optimal isotope internal standard in step 6) is selected by a self-developed algorithm.

Preferably, in the above-mentioned method, the principal component analysis in step 8) is completed by self-adaptive conversion.

Preferably, in the above-mentioned method, the differential metabolites analysis in step 8) is completed by a multivariate statistical analysis.

Preferably, in the above-mentioned method, the identification of metabolites and the identification of differential metabolites in step 9) are completed by a software or an algorithm platform.

### Effects of the present invention

Compared with the prior art, the metabolomics relative quantitative analysis method of the present invention has the following beneficial effects:
1) The research idea of the present invention is different from the previous research mode. It is not necessary to extract multiple reaction monitoring mode (MRM) ion pairs from high-resolution mass spectrometry data firstly and then transfer same to triple quadrupole mass spectrometry to quantitatively scan these ion pairs. The research idea of the present invention involves directly extracting the primary variable information of mass spectrometry from the high-resolution mass spectrometry data firstly, calculating the relative concentration values of metabolites in metabolomics samples by using both the isotope internal standard and NIST serum samples as correction materials, acquiring differential metabolites of the primary variables by primary analysis, and acquiring the full identification table of metabolites by secondary analysis, especially the differential metabolites with determined substance composition or structure;
2) the analysis method of the present invention does not require the simultaneous use of two mass spectrometry platforms (quadrupole mass spectrometry and high-resolution mass spectrometry), can meet both qualitative and quantitative requirements using only one platform (high-resolution mass spectrometry), and has low costs, simple operation, and wide applicability;
3) the analysis method of the present invention simultaneously uses multiple isotope internal standards and NIST serum samples as correction materials, so that the quantitative results are more accurate, and the results between various laboratories are compatible (the calibration materials are NIST serum samples), which solves the problem of islanding effect of existing metabolomics data;
4) the pretreatment of metabolomics samples is simple and easy to implement, without discrimination effect of target metabolite types, which is suitable for qualitative and quantitative research of various types of metabolites; and
5) compared with traditional metabolomics research, the analysis method of the present invention relies on a computer algorithm script, which can quickly identify the metabolite structure, has a higher accuracy, and avoids the subjectivity of artificial screening.

### Brief Description of the Drawings

Figure 1 shows the flow chart of the establishment of a metabolomics relative quantitative analysis method based on UPLC/HRMS.
Figure 2 shows a positive ion mode base peak ion (BPI) chromatogram of human serum.
Figure 3 shows a negative ion mode base peak ion (BPI) chromatogram of human serum.
Figure 4 shows a principal component analysis (PCA) score plot of human serum samples in positive ion mode.
Figure 5 shows a principal component analysis (PCA) score plot of human serum samples in negative ion mode.
Figure 6 shows correlation scatter plots of the concentrations of four metabolites (choline, betaine, L-carnitine and creatinine) in human serum samples using the metabolomics relative quantitative analysis method and the targeted absolute quantitative analysis method.

### Detailed Description of Embodiments

### [Definition of Terms]

Unless otherwise specified, the term "internal standard" as used herein refers to an appropriate pure product added to a test sample during quantitative analysis for calculating the content of the components to be tested.

Unless otherwise specified, the term "isotope" as used herein refers to the mutual designation between different nuclides which belong to the same element, and have the same number of protons and different numbers of neutrons. For example, hydrogen element comprises three isotopes: protium (H or ¹H), deuterium (D or ²H) and tritium (T or ³H); carbon element comprises three isotopes: carbon 12 (¹²C), carbon 13 (¹³C) and carbon 14 (¹⁴C); nitrogen element comprises two isotopes: nitrogen 14 (¹⁴N) and nitrogen 15 (¹⁵N); and oxygen element comprises three isotopes: oxygen 16 (¹⁶O), oxygen 17 (¹⁷O) and oxygen 18 (¹⁸O).

Unless otherwise specified, the term "isotope internal standard" as used herein refers to a stable internal standard substance formed after replacing at least isotope with a higher abundance contained in the structure with an isotope with a lower abundance. For example, in the molecular structure of choline chloride as the internal standard, if all of the nine hydrogen atoms (or protium atoms) contained in the three methyl groups are replaced by deuterium atoms, the corresponding isotope internal standard-choline chloride-trimethyl-d9 can be acquired. For another example, in the molecular structure of L-valine as the internal standard, if the carbon 12 atom contained in the carboxyl group is replaced by the carbon 13 atom, the corresponding isotope internal standard-L-valine-1-13C can be acquired. According to different metabolic functions, the isotope internal standards in the present invention can be divided into carbohydrates (such as D-fructose-1-13C), energy (such as 5'-adenosine triphosphate-15N5), nucleotides (such as uridine-2-13C), amino acids (such as L-valine-1-13C), cofactors and vitamins (such as vitamin B3-d4) and many other categories.

Unless otherwise specified, the term "NIST serum" as used herein refers to Frozen Human Serum (abbreviated as FHS) provided or sold by the National Institute of Standards and Technology (abbreviated as NIST).

Unless otherwise specified, the term "protein precipitation reagent" as used herein refers to a reagent added to a biological sample to precipitate proteins in the sample via denaturation. Common protein precipitation reagents include but are not limited to salts (such as ammonium sulfate, sodium sulfate, and sodium chloride), organic solvents (such as methanol, acetonitrile, and acetone), *etc.*

Unless otherwise specified, the term "metabolomics sample" as used herein refers to a biological sample used for metabolomics research. Common metabolomics samples include but are not limited to animal samples (such as blood, urine, feces, saliva, hair, and cells of humans or animals), plant samples (such as roots, stems, leaves, flowers, fruits, and seeds of plants), microbial samples (such as cells, spores, fermentation broth, and culture solutions of microorganisms), subcellular structure samples (such as mitochondria, exosomes, and vesicles of organelles), *etc.*

Unless otherwise specified, the term "quality control sample" (or "QC sample") as used herein refers to a mixed sample acquired by mixing a certain amount of experimental sample for the purpose of monitoring the stability of the data collected by the instrument during the experiment, substantially checking chromatographic peak profiles of experimental samples and calibrating non-serum or plasma samples in the relative quantitative detection.

Unless otherwise specified, the term "primary mass spectrometry full scanning and data-dependent secondary mass spectrometry scanning mode" (or "full MS-ddMS2") as used herein refers to a mode in which the ions are fragmented by the instrument while primary mass spectrum data is collected, so as to generate secondary mass spectrum fragments. The primary and secondary mass spectrum data can be acquired simultaneously. Preferably the top 3 ions in signal intensity within the specified time are subjected to secondary fragmentation, the selected top 3 ions in signal intensity are excluded firstly when cycling to the next time period, and additional top 3 ions in signal intensity are screened for secondary fragmentation again, and so on until the end of time periods.

Unless otherwise specified, the term "transposed data" as used herein refers to the conversion of raw mass spectrometry data generated by different mass spectrometers into normalized and text-processable mass spectrum data; the term "primary mass spectrum transposed data" refers to the mass spectrum transposed data comprising the primary molecular information of the detection target; the term "secondary mass spectrum transposed data" refers to the mass spectrum transposed data comprising the secondary molecular information of the detection target; and correspondingly, the term "numerical transposition" refers to the process of converting raw mass spectrometry data into normalized and text-processable data.

Unless otherwise specified, the term "deconvolution" as used herein refers to the separation and construction of information of each metabolite parent ion, including mass-to-charge ratios, retention times, and corresponding chromatographic peak information, *etc,* from primary mass spectrum transposed data.

Unless otherwise specified, the term "primary variable" as used herein refers to the mass-to-charge ratio and corresponding chromatographic peak information of all primary mass spectrum data (parent ions) collected by the instrument. In the field of metabolomics, common primary variables include but are not limited to primary variable number, parent ion mass-to-charge ratio, retention time, peak area value, *etc.*

Unless otherwise specified, the term "structure identification" (or "metabolite identification") as used herein refers to the derivation process of comparing of secondary mass spectrum fragments (parent ion fragments) of a chromatographic peak to secondary mass spectrum fragments in a public database (e.g., KEGG) and obtaining the substance structure corresponding primary mass spectrum data (parent ions). Substances after structure identification will match the numbers in the corresponding public databases.

Unless otherwise specified, the term "relative quantitative concentration" (or "relative quantitative result") as used herein refers to the relative concentration based on the NIST serum sample substance concentration acquired by the following steps: the concentrations of the metabolites in the NIST serum sample are linearly fitted with the ratios of the peak areas of the metabolites to the peak areas of the isotope internal standards to acquire a linear equation, and then the peak area ratio (or primary variable) of the metabolites in the metabolomics samples and the isotope internal standards is substituted into the linear equation to calculate the relative concentration based on the NIST serum sample substance concentration.

Unless otherwise specified, the term "primary analysis" as used herein refers to the process of statistical analysis based on the data of primary variables; the term "principal component analysis" refers to the following process: generating new characteristic variables by linear combination of metabolite variables according to a certain weight, and classifying each group of data through the main new variables (principal components); the term "self-adaptive conversion" refers to the data normalization process that performs weight conversion on the primary variable data; the term "differential metabolites analysis" (or "differential analysis of metabolite primary variables") refers to the analysis of differences between groups on the information of primary variables of metabolites by using statistical difference analysis methods; and the term "multivariate statistical analysis" refers to the analysis of statistical patterns of multiple objects and multiple indicators when they are related to each other.

Unless otherwise specified, the term "secondary analysis" as used herein refers to the process of performing statistical analysis in combination with secondary mass spectrum data on the basis of primary analysis; and the term "differential metabolite identification" refers to the structure identification based on the differential metabolites of the primary analysis.

Specifically, the present invention discloses a metabolomics relative quantitative analysis method based on UPLC/HRMS. The method comprises the following steps:
1) formulating an isotope internal standard mixed solution based on multiple isotope internal standards;
2) based on a metabolomics sample, determining a relative quantitative correction sample matching with the metabolomics sample, and formulating relative quantitative standard curve correction solutions in a series of concentration gradients by using the relative quantitative correction sample and the isotope internal standard mixed solution in step 1);
3) formulating a metabolomics sample solution by using the metabolomics sample in step 2) and the isotope internal standard mixed solution in step 1);
4) collecting the raw mass spectrometry data of the metabolomics sample solution in step 3) and the relative quantitative standard curve correction solutions in a series of concentration gradients in step 2) by using the UPLC/HRMS platform;
5) acquiring primary mass spectrum transposed data and secondary mass spectrum transposed data based on the raw mass spectrometry data in step 4), and acquiring deconvolution results comprising a variety of primary variable information based on the primary mass spectrum transposed data;
6) combining the deconvolution results of the primary mass spectrum transposed data and the secondary mass spectrum transposed data in step 5), and referring to the primary variable information and secondary variable information of single isotope internal standard to identify the isotope internal standard, and selecting the optimal isotope internal standard for linear fitting;
7) performing linear fitting by using concentrations of the relative quantitative standard curve correction solutions in a series of concentration gradients in step 2) and the primary variable information acquired in step 5) to acquire a linear equation;
8) based on the linear equation in step 7), acquiring the relative quantitative results of the metabolomics sample solution in step 3), and completing principal component analysis and differential metabolites analysis of the primary variable information; and
9) completing identification of metabolites and identification of differential metabolites by combining the deconvolution results of the primary mass spectrum transposed data with the secondary mass spectrum transposed data in step 5).

In some preferred embodiments, the isotope internal standard mixed solution in step 1) is formulated by the following method: firstly taking an appropriate amount of several (e.g., nine) isotope internal standards, and adding a solvent (e.g., water or methanol) thereto, respectively, to formulate a certain concentration (e.g., 1-15 mg/mL) of a mother solution of single isotope internal standard; and then taking an appropriate amount of each of the mother solutions of single isotope internal standard, respectively, mixing same, and adding a solvent (e.g., water or methanol) thereto to acquire an isotope internal standard mixed solution (the quantity and type of the isotope internal standard and the concentration of the mother solution of single isotope internal standard can be appropriately adjusted according to the specific type of metabolites in the metabolomics sample and the actual concentration response).

In some preferred embodiments, the metabolomics sample in step 2) is a serum or plasma sample, and in this case, NIST serum is used as a relative quantitative correction sample. In other embodiments, the metabolomics samples in step 2) are other samples (such as cells, tissues, organs or metabolites of animals or plants), and in this case, the quality control sample (which is formulated by mixing appropriate amounts of multiple metabolomics samples) is used as the relative quantitative correction sample.

In some preferred embodiments, the relative quantitative standard curve correction solutions in a series of concentration gradients in step 2) are formulated by the following method: taking a series of (e.g., seven) volumes of relative quantitative correction samples (which are determined based on the specific type of metabolomics samples, and the volume thereof can be appropriately adjusted according to the actual needs), adding an isotope internal standard and a protein precipitation reagent (e.g., methanol) thereto, respectively, and mixing and centrifuging the mixture; taking the supernatant, and concentrating same; adding a reconstituted solvent (e.g., 80% methanol in water (v/v)) to the residue, and mixing same; and taking the supernatant to acquire relative quantitative standard curve correction solutions in a series of concentration gradients.

In some preferred embodiments, the metabolomics sample solution in step 3) is formulated by the following method: taking a metabolomics sample (the number and the type of samples and the sampling amount of a single sample can be appropriately adjusted according to actual needs; in addition, according to the differences in the properties or types of the samples, the samples can be measured with a pipette or weighed with a balance), adding an isotope internal standard and a protein precipitation reagent (e.g., methanol) thereto, respectively, and mixing and centrifuging the mixture; taking the supernatant, and concentrating same; adding a reconstituted solvent (e.g., 80% methanol in water (v/v)) to the residue, and mixing same; and taking the supernatant to acquire a metabolomics sample solution.

In some preferred embodiments, the raw mass spectrometry data in step 4) needs to be collected by means of an ultra-high performance liquid chromatograph coupled with a high-resolution mass spectrometer (abbreviated as a "UPLC/HRMS platform") and under certain chromatographic and mass spectrometry conditions. For example, in the chromatographic conditions, the chromatographic column used may be an octadecylsilane-bonded silica gel column (e.g., a Waters ACQUITY UPLC BEH C18 chromatographic column), and the mobile phase used may be a binary mobile phase system (e.g., a formic acid solution in water/a formic acid solution in acetonitrile in positive ion mode, or ammonium formate solution in water/acetonitrile in negative ion mode), the elution mode used may be gradient elution, and conditions such as flow rate, injection volume and column temperature can be appropriately adjusted according to the actual chromatographic behavior of the substance to be tested; In the mass spectrometry conditions, full MS-ddMS2 may be used for data collection, an ion source for soft ionization (e.g., an electrospray ion source/ESI) may be used as an ion source, conditions such as spray voltage, sheath gas/auxiliary gas pressure, capillary temperature, collision voltage and scanning resolution and range can be appropriately adjusted according to the actual chromatographic behavior of the substance to be tested.

In some preferred embodiments, the primary mass spectrum transposed data and the secondary mass spectrum transposed data in step 5) are acquired by means of data transposition. The data transposition process usually needs to be completed by software or an algorithm platform, such as the open source ProteoWizard software.

In some preferred embodiments, the deconvolution result in step 5) is acquired by means of deconvolution. The deconvolution process usually needs to be completed by software or an algorithm platform, such as a BioDeep metabolomics cloud analysis platform (abbreviated as a BioDeep cloud platform) or open source R software (http://www.bioconductor.org/).

In some preferred embodiments, the identification of the isotope internal standard in step 6) is completed by a self-developed algorithm. In the self-developed algorithm, the deconvolution results of the primary mass spectrum transposed data are compared with the secondary mass spectrum transposed data (for example, firstly acquiring the rt (retention time), mz (mass-to-charge ratio of the parent ion) and ms2 (secondary fragments) of a single isotope internal standard, and then referring to the rt, mz and ms2 of the single isotope internal standard in the metabolomics sample solution, the quality control sample solution and the relative quantitative standard curve correction solution, to ensure that the error range of the corresponding mz is within 10 ppm, the difference value of the corresponding rt is minimum, and ms2 can be exactly matched) to complete the identification of the isotope internal standard.

In some preferred embodiments, the optimal isotope internal standard in step 6) is selected by the following method: the peak area of the primary variable in the NIST serum sample (or the relative quantitative correction sample) is compared with the peak area of the primary variable of each internal standard in the isotope internal standard mixed solution to form a ratio, and then linearly fitted with the concentration of the NIST serum sample (or relative quantitative correction sample) to acquire the correlation coefficient r, preferred is the isotope internal standard which has the largest r value and the concentration of the primary variable in the NIST serum sample (or relative quantitative correction sample) ranging from 0.05 P to 5 P.

In some preferred embodiments, the principal component analysis in step 8) is completed by self-adaptive conversion. In the self-adaptive conversion, the value is acquired by subtracting the mean of each group of data from the original observation value and dividing by the standard deviation.

In some preferred embodiments, the differential metabolites analysis in step 8) is completed by a multivariate statistical analysis. The multivariate statistical analysis uses multivariate statistical analysis methods such as principal component analysis, t-test and VIP (spatial projection importance or difference weight contribution value) calculation to screen differential metabolites, preferred are the differential metabolites which have a t-test result of P value ≤ 0.05 and meet the requirement of VIP ≥ 1.

In some preferred embodiments, the identification of metabolites and the identification of differential metabolites in step 9) are completed by software or an algorithm platform, such as a BioDeep metabolomics cloud analysis platform (abbreviated as a BioDeep cloud platform).

The relative quantitative metabolomics analysis method of the present invention will be further illustrated below by specific examples. Unless otherwise specified, the materials, reagents, instruments, software, *etc.*, used in the examples can be acquired by conventional commercial means.

### Example: Establishment of a metabolomics relative quantitative analysis method for healthy person and cerebral infarction patient serum based on UPLC/HRMS.

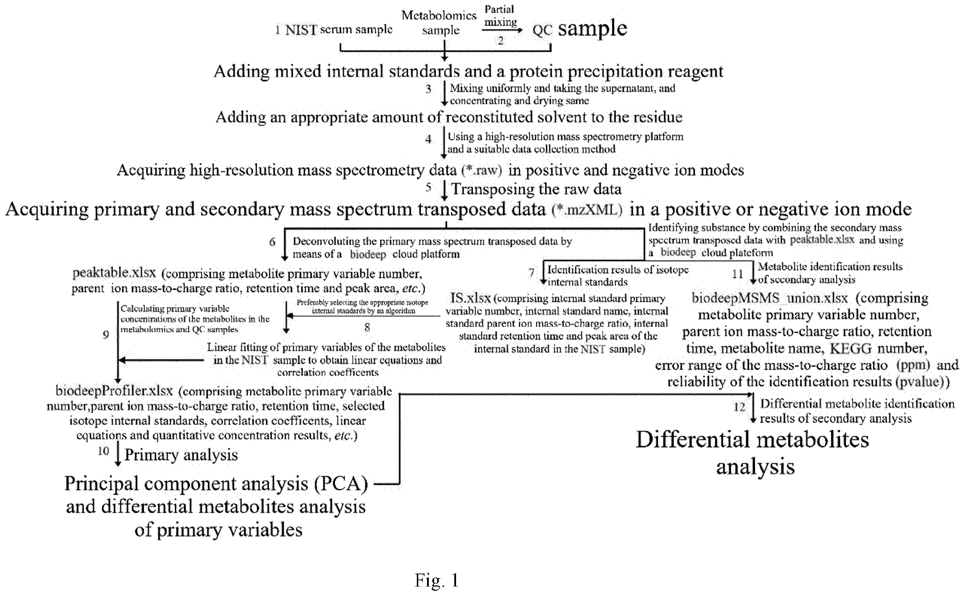

The process of establishing a metabolomics semi-quantitative analysis method for healthy person and cerebral infarction patient serum based on UPLC/HRMS is as shown in Figure 1. The specific implementation steps are as follows:
1. Preparation of internal standards
1.1 Preparation of an isotope internal standard mixed solution:
   an appropriate amount of 9 isotope internal standards such as D-fructose-1-13C (F-13C), L-valine-1-13C (Val-13C), choline chloride-trimethyl-d9 (Choline-d9), 5'-adenosine triphosphate-15N5 (ATP-15N5), L-phenylalanine-1-13C (Phe-13C), uridine-2-13C (U-2-13C), vitamin B3-d4 (VB3-d4), L-carnitine hydrochloride-methyl-d3 (L-carnitine-d3) and betaine hydrochloride-trimethyl-d9 (betaine-d9) were taken, and water or methanol was added thereto, respectively, to prepare a mother solution of single isotope internal standard with a concentration of 1-15 mg/mL; then an appropriate amount of each of the mother solutions of 9 single isotope internal standard was taken, respectively, and mixed; and an appropriate amount of water or methanol were added thereto to prepare an isotope internal standard mixed solution of 9 isotope internal standards having a concentration ranging from 1-50 µg/mL.
1.2 Preparation of an NIST serum standard curve correction solution:
   NIST serums (Lot. No.: SRM 909c) (*i.e.*, the NIST serum sample in Figure 1) in a total of 7 gradients (5, 10, 50, 100, 200, 300, and 500 µL) were taken with a pipette, and 100 µL of the isotope internal standard mixed solution prepared in section 1.1 and 3 times the volume of methanol pre-frozen at -20°C were respectively added for protein precipitation, and the mixture was mixed thoroughly. The resulting mixture was centrifuged at 12,000 rpm and 4°C for 10 min, then all supernatants were taken and concentrated in a vacuum concentration dryer. 150 µL of 80% methanol/water mixture (v/v) (which is used as a reconstitution solvent) pre-frozen at -20°C was added to the residue, and mixed thoroughly, and then the supernatant was taken as the NIST serum standard curve correction solution.

2. Preparation of samples:
preparations of serum metabolomics sample solutions from healthy person and cerebral infarction patient as well as quality control sample solutions:
10 serum samples from healthy person and 10 serum samples from cerebral infarction patient were selected as metabolomics samples (20 in total); 20 µL of each metabolomics sample was taken (400 µL in total) and mixed thoroughly, and then used as quality control samples (i.e., the QC samples in Figure 1, for the final normalization of the method). 100 µL of each of 20 metabolomics samples and 4 QC samples were taken with a pipette, and 400 µL of methanol (protein precipitation reagent) pre-frozen at -20°C and 100 µL of the isotope internal standard mixed solution prepared in section 1.1 were added, respectively, and mixed thoroughly, and then centrifuged at 12000 rpm and 4°C for 10 min; and all supernatants were taken and concentrated in a vacuum concentration dryer, 150 µL of 80% methanol/water mixture (v/v) (which is used as a reconstitution solvent) pre-frozen at -20°C was added to the residue, and mixed thoroughly, and then the supernatants were taken as metabolomics sample solutions from healthy person and cerebral infarction patients and quality control sample solutions.
3. Selection of instruments and condition parameters thereof:
3.1 selected instruments:
   Thermo Scientific Ultimate 3000 liquid chromatograph coupled with Thermo Scientific Q-Exactive mass spectrometer.
3.2 Selected liquid chromatographic conditions:
   chromatographic column: Waters ACQUITY UPLC BEH C18 chromatographic column (100 mm × 2.1 mm, 1.7 µm);
   mobile phase: in positive ion mode, 0.1% formic acid solution in water (1 mL of formic acid per 1 L of solution) was used as mobile phase A, and 0.1% formic acid solution in acetonitrile (1 mL of formic acid per 1 L of solution) was used as mobile phase B; in negative ion mode, 5 mM ammonium formate solution in water (5 mM ammonium formate per 1 L of solution) was used as mobile phase A and acetonitrile was used as mobile phase B;
   elution mode: gradient elution was used, and the specific procedure was as follows: 0-1 min, 2% of mobile phase A; 1-9 min, 2%-50% of mobile phase A; 9-12 min, 50%-98% of mobile phase A; 12-13.5 min, 98% of mobile phase A; 13.5-14 min, 98%-2% of mobile phase A; 14-20 min, 2% of mobile phase A;
   flow rate: 0.25 mL/min;
   injection volume: 2 µL;
   and column temperature: 40°C.
3.3 Selected mass spectrometry conditions:
   data collection method: primary mass spectrometry full scanning and data-dependent secondary mass spectrometry scanning (full MS-ddMS2) mode was used for determination to acquire primary and secondary mass spectrum data simultaneously;
   ion source: electrospray ion source (ESI);
   spray voltage: 3.5 kV in positive ion mode, and 2.5 kV in negative ion mode;
   sheath gas pressure: 30 arb;
   auxiliary gas pressure: 10 arb;
   capillary temperature: 325°C;
   the full scanning resolution is 70000 FWHM, and the mass spectrum scanning range is m/z 81-1000;
   secondary fragmentation was performed using high energy collision induced dissociation (HCD) with a collision voltage of 30 eV, and unnecessary secondary mass spectrum information was dynamically excluded.

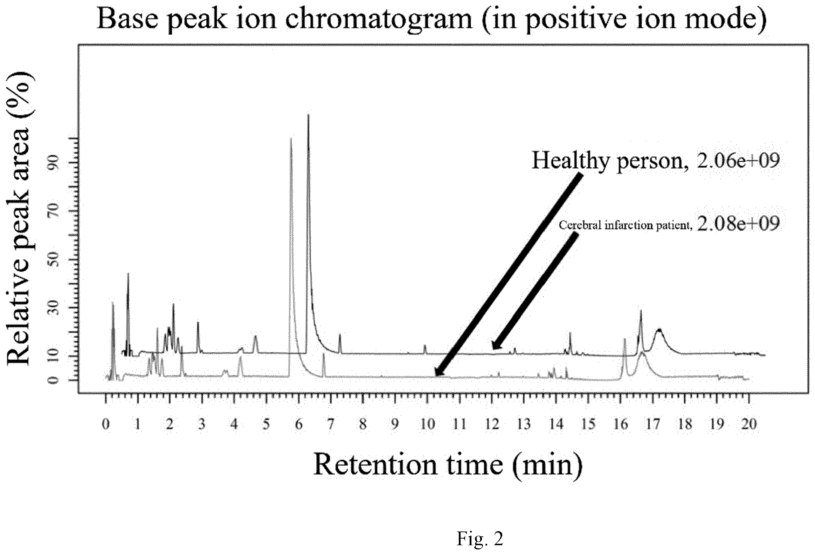

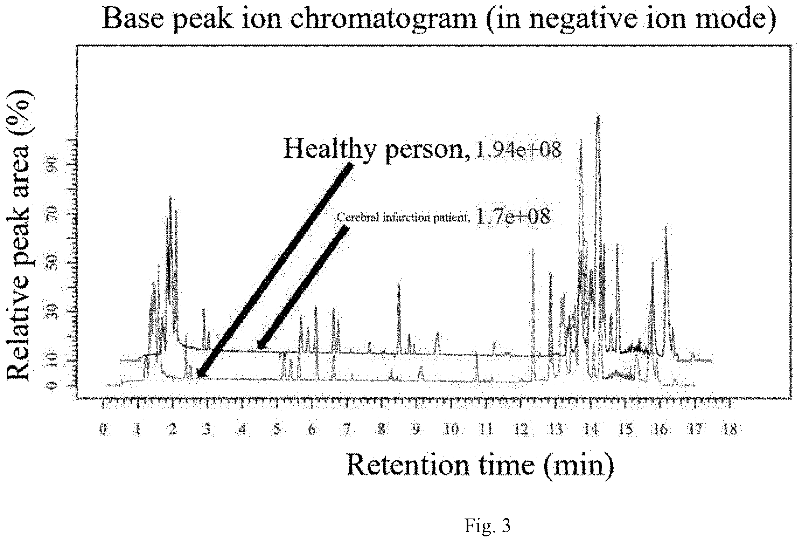

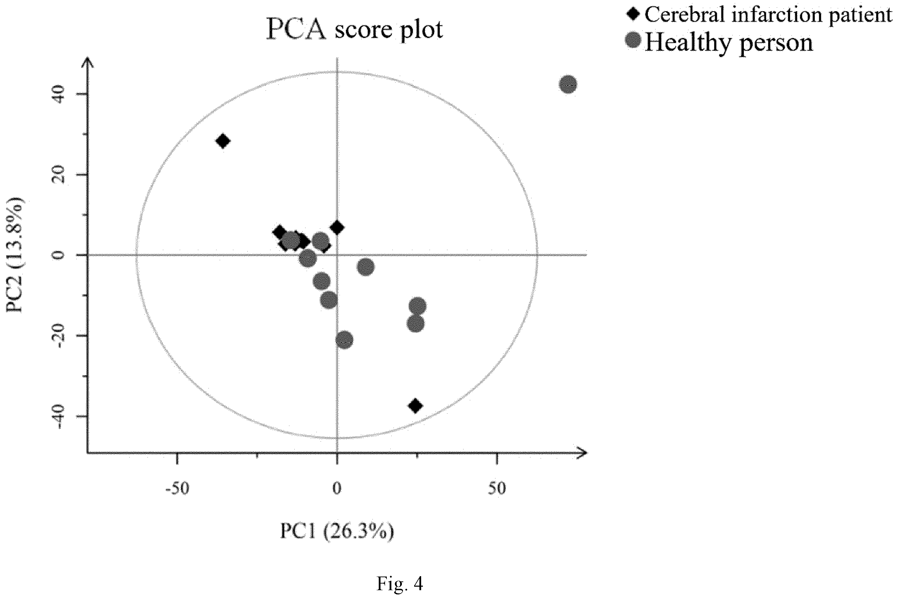

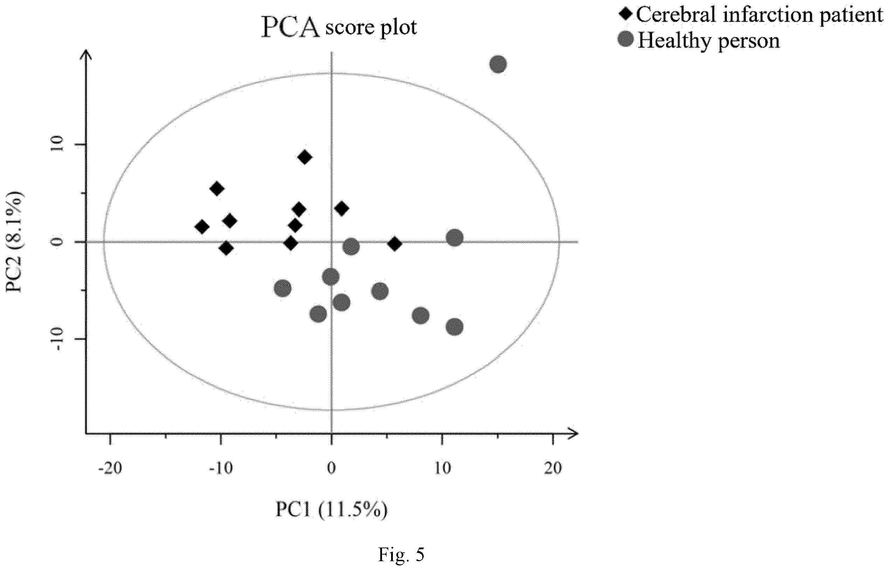

4. Data processing:
4.1 transposition of raw mass spectrometry data:
   in positive and negative ion modes, ^{∗}.raw files comprising raw mass spectrometry data of 20 serum metabolomics sample solutions from healthy person and cerebral infarction patient and 4 QC sample solutions prepared in section 2 and 7 NIST serum standard curve correction solutions prepared in section 1.2 (31 sample solutions in total) were acquired, respectively. The original data files were subjected to data transposition by ProteoWizard software (open source software, available through http://proteowizard.sourceforge.net/) to form ^{∗}.mzXML files comprising primary mass spectrum transposed data and secondary mass spectrum transposed data in positive and negative ion modes, respectively.
4.2 Data deconvolution after transposition:
   the ^{∗}.mzXML files which comprise primary mass spectrum transposed data in positive and negative ion modes and formed in section 4.1 were deconvoluted by the biodeep cloud platform (the corresponding open source software and scripts also can be downloaded through http://www.bioconductor.org/) to acquire 13128 primary variables in positive ion mode, and 17272 primary variables in negative ion mode, and corresponding files peaktable_pos.xlsx and peaktable_neg.xlsx were output as the results of primary deconvolution, wherein both files comprise primary variable information such as xc_ms id (primary variable number), mz (parent ion mass-to-charge ratio), rt (retention time), and intensity (peak area).
4.3 Identification and preferred selection of the isotope internal standard:
   the file peaktable_pos.xlsx or peaktable_neg.xlsx output in section 4.2 was combined with the secondary mass spectrum transposed data formed in section 4.1, respectively. Using the self-developed algorithm and referring to the rt (retention time), mz (parent ion mass-to-charge ratio) and ms2 (secondary fragmentation) of single isotope internal standard, it is ensured that the error range of mz in human serum metabolomics samples, QC samples and NIST serum samples was within 10 ppm, the difference value between the retention time of these samples and the retention time of the reference isotope internal standard was minimum, and secondary fragments can be exactly matched. 5 isotope internal standards, including internal standard substances Val-13C, Choline-d9, Phe-13C, L-carnitine-d3 and betaine-d9 were identified in positive ion mode, and 5 isotope internal standards, including F-13C, Val-13C, Phe-13C, U-2-13C and VB3-d4 were identified in negative ion mode. Correspondingly, an IS.xlsx file was output, which comprises primary variable information such as IS xc_ms id (isotope internal standard primary variable number), IS name (isotope internal standard name), IS mz (isotope internal standard parent ion mass-to-charge ratio), rt (isotope internal standard retention time), and intensity (isotope internal standard peak area contained in NIST serum samples).
A suitable isotope internal standard is preferably selected by using a self-developed algorithm. The specific procedure is as follows: the ratios of the primary variable intensity (peak area) of the NIST serum samples in the file peaktable_pos.xlsx or peaktableneg.xlsx output in section 4.2 to the peak areas of the 5 isotope internal standards, including Val-13C, Choline-d9, Phe-13C, L-carnitine-d3 and betaine-d9, identified in positive ion mode (5 isotope internal standards, including F-13C, Val-13C, Phe-13C, U-2-13C and VB3-d4 identified in negative ion mode) were linearly fitted with the 7 NIST serum standard curve correction concentrations, respectively. Each primary variable would acquire 5 linear equations and correlation coefficient r, preferred was the isotope internal standard having the largest correlation coefficient r value, and secondly, having primary variable concentrations ranging from 0.05 P to 5 P.
4.4 Linear fitting of primary variables in NIST serum samples:
   the peak areas of the metabolites in the NIST serum standard curve correction solution acquired in section 4.2 were ranked in ascending order, the concentration of 100 µL of NIST serum was P, the corresponding concentrations of 5, 10, 50, 100, 200, 300, and 500 µL of NIST serum were 0.05 P, 0.1 P, 0.5 P, P, 2 P, 3 P, and 5 P, respectively, and the concentration order was used as the concentration points for linear fitting. Then, the ratios of the peak areas of the metabolites in the NIST serum standard curve correction solutions to the peak area of each preferred isotope internal standard were linearly fitted with the above-mentioned 7 concentration points, and the linear equation and the correlation coefficient r were calculated, preferred was the isotope internal standard substance having the largest correlation coefficient r, and secondly, having primary variable concentrations ranging from 0.05 P to 5 P. In positive ion mode, there are 8558 primary variables with the correlation coefficient r greater than 0.80; and in negative ion mode, there are 5151 primary variables with the correlation coefficient r greater than 0.80.
4.5 Calculation of quantitative concentrations of primary variables in metabolomics samples:
   the ratios of the peak areas of the metabolites in the metabolomics sample solutions acquired in section 4.2 to the peak areas of the preferred isotope internal standards in the NIST serum standard curve correction solutions were substituted into the linear equation acquired in section 4.4 to acquire a file biodeepProfiler_pos.xlsx or biodeepProfiler neg.xlsx comprising the relative quantitative concentrations of metabolites in metabolomics samples (in P as concentration unit).
4.6 Analysis of primary mass spectrum data:
   data adaptive (UV) conversion processing was selected for the file biodeepProfiler_pos.xlsx or biodeepProfiler neg.xlsx acquired in section 4.5, respectively to acquire the base peak ion (BPI) chromatograms (as shown in Figure 2 and Figure 3) and the principal component analysis score plots (as shown in Figure 4 and Figure 5) in positive and negative ion modes; in the multivariate statistical analysis, the screening thresholds of P value ≤ 0.05 and VIP ≥ 1 were selected to perform difference analysis of metabolite primary variables on specific metabolomics samples. Preferably, quality control samples can also be used for normalization.
4.7 Analysis of secondary mass spectrum data-identification of metabolites:
   the deconvoluted primary variables acquired in section 4.2 were combined with the secondary mass spectrum transposed data formed in section 4.1 to perform metabolite identification, thereby acquiring a biodeepMSMS_union.xlsx file comprising the results of metabolite identification, and positive ion mode and negative ion mode metabolites are pooled to obtain a total of 304 metabolites.
4.8 Analysis of secondary mass spectrum data-identification of differential metabolites:
   the metabolites screened in section 4.7 were integrated with the analysis results of primary variable differential metabolites acquired in section 4.6, and a total of 33 differential metabolites with determined substance structure were acquired.

5. Comparison of metabolomics relative quantitative analysis and targeted absolute quantitative analysis:
4 choline analogs, including choline, betaine, L-carnitine and creatinine were used as metabolites for the comparison of metabolomics relative quantitative analysis and targeted absolute quantitative analysis results.
5.1 Targeted absolute quantitative analysis:
5.1.1 Preparation of samples for targeted absolute quantitative analysis:
   the samples for targeted absolute quantitative analysis were consistent with the samples for metabolomics relative quantitative analysis. In the preparation of metabolomics samples, one more sample was prepared in parallel, respectively. The samples included serum samples of 10 healthy person and 10 cerebral infarction patient, 7 NIST serum samples and 4 QC samples, and the sample preparation process was the same as section 1 and section 2.
5.1.2 Targeted absolute quantitative analysis method:
   5.1.2.1 selected instruments:
      Waters ACQUITY UPLC liquid chromatograph coupled with AB 4000 mass spectrometer.
   5.1.2.2 Selected liquid chromatographic conditions:
      chromatographic column: ACQUITY UPLC^{®} BEH HILIC chromatographic column (100 mm × 2.1 mm, 1.7 µm);
      mobile phase: acetonitrile was used as mobile phase A, and 0.1% formic acid solution in water and 10 mM ammonium formate solution in water (1 mL formic acid and 10 mM ammonium formate per 1 L solution, respectively) were used as mobile phase B;
      elution mode: gradient elution was used, and the specific procedure was as follows: 0-1 min, 80% of mobile phase A; 1-2 min, 80%-70% of mobile phase A; 2-2.5 min, 70% of mobile phase A; 2.5-3 min, 70%-50% of mobile phase A; 3-3.5 min, 50% of mobile phase A; 3.5-4 min, 50%-80% of mobile phase A; 4-6 min, 80% of mobile phase A;
      flow rate: 0.40 mL/min;
      injection volume: 5 µL;
      and column temperature: 40°C.
   5.1.2.3 Selected mass spectrometry conditions:
      data collection method: multiple reaction monitoring (MRM) was used for scanning and data collection;
      ion source: electrospray ion source (ESI);
      spray voltage: 5.0 kV in positive ion mode;
      ion source temperature: 500°C;
      collision gas: 6 psi;
      curtain gas: 30 psi;
      atomizing gas and auxiliary gas: 50 psi;
      and the ion pairs used for quantitative analysis were choline (104.075 > 44.9), betaine (118.080 > 41.9), L-carnitine (162.023 > 59.9) and creatinine (114.025 > 86.1), respectively, and the ion pairs for isotope internal standard collection were choline-d9 (113.030 > 69.0), betaine-d9 (127.064 > 68.0) and L-carnitine-d3 (165.105 > 103.1), respectively, wherein the internal standard corresponding to creatinine was L-carnitine-d3.
5.1.3 Targeted absolute quantitative data processing:
   peak area values of choline, betaine, L-carnitine, creatinine, choline-d9, betaine-d9 and L-carnitine-d3 in serum samples of 10 healthy person and 10 cerebral infarction patient, 7 NIST serum samples and 4 QC samples were derived by using a self-developed algorithm. NIST serum sample concentrations 0.05 P, 0.1 P, 0.5 P, P, 2 P, 3 P and 5 P were used as independent variable gradient concentration points, the ratios of the peak areas of choline, betaine, L-carnitine, creatinine in NIST serum samples to the peak areas of the corresponding isotope internal standards were used as dependent variables, and the independent variables and the dependent variables were linearly fitted to acquire the linear equation and the correlation coefficient r. The ratios of the peak areas of choline, betaine, L-carnitine and creatinine in the metabolomics samples to the peak areas of the corresponding isotope internal standards were substituted into the linear equation to calculate the absolute quantitative concentrations of metabolites in the metabolomics samples.

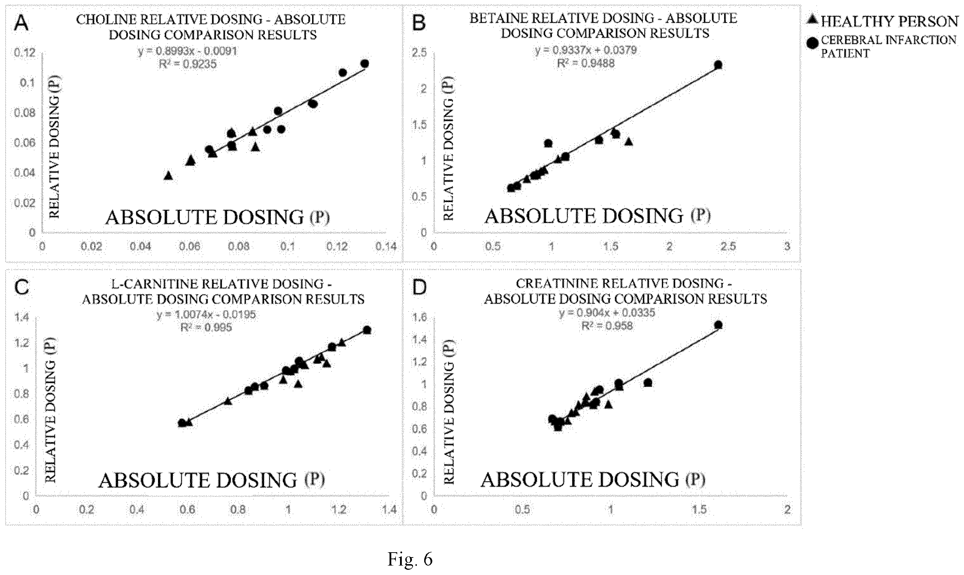

5.2 Comparison of the results of metabolomics relative quantitative analysis and targeted absolute quantitative analysis:
5.2.1 The metabolomics relative quantitative analysis took all metabolites as research objects. In order to acquire the relative quantitative analysis results of the 4 metabolites choline, betaine, L-carnitine, and creatinine, the results acquired in section 4.5 and section 4.7 were subjected to integration analysis to acquire the relative quantitative concentrations of these 4 metabolites.
5.2.2 Correlation analysis for the absolute quantitative concentrations of the 4 metabolites in serum samples of the 10 healthy person and 10 cerebral infarction patient acquired in section 5.1.3 and the relative quantitative concentrations acquired in section 5.2.1 was performed to acquire the scatter plots as shown in Figure 6, in which A to D were the correlation scatter plots of the concentrations (concentration in P) of choline, betaine, L-carnitine and creatinine acquired by the two detection methods, respectively. The correlation coefficients r of the concentration results acquired by the two detection methods were all greater than 0.99, the detection results were highly correlated, and there was no difference between the two methods.
5.2.3 Furthermore, the relative standard deviations (RSD, %) of the absolute quantitative concentrations of the 4 metabolites in the serum samples of 10 healthy person and 10 cerebral infarction patient acquired in section 5.1.3 and the relative quantitative concentrations acquired in section 5.2.1 and two-sided paired test results are shown in Table 1. As shown in Table 1, there is no significant difference between the RSD values of the concentrations of the two detection results for the healthy person and cerebral infarction patient groups (P value of greater than 0.05), indicating that the two detection results are similar, and the metabolomics relative quantitative analysis method of the present invention has higher accuracy. Moreover, the metabolomics relative quantitative analysis method of the present invention can simultaneously realize the qualitative analysis of metabolites based on the same analysis and testing platform.

**Table 1. Comparison results of RSD values of quantitative concentrations of 4 metabolites acquired by two detection methods**

| Metabolites | RSD (%) | | | |
|---|---|---|---|---|
| | Healthy person (10) | | Cerebral infarction patient (10) | |
| | Absolute quantification | Relative quantification | Absolute quantification | Relative quantification |
| Choline | 18.11 | 16.99 | 24.02 | 22.07 |
| Betaine | 21.93 | 23.55 | 15.34 | 19.90 |
| L-Carnitine | 20.48 | 20.78 | 11.96 | 12.09 |
| Creatinine | 10.78 | 11.04 | 31.39 | 30.86 |
| P value | 0.6700 | | 0.7197 | |

## Claims

1. A metabolomics relative quantitative analysis method based on UPLC/HRMS, **characterized in that** it comprises the following steps:
1) formulating an isotope internal standard mixed solution based on multiple isotope internal standards;
2) based on a metabolomics sample, determining a relative quantitative correction sample matching with the metabolomics sample, and formulating relative quantitative standard curve correction solutions in a series of concentration gradients by using the relative quantitative correction sample and the isotope internal standard mixed solution in step 1);
3) formulating a metabolomics sample solution by using the metabolomics sample in step 2) and the isotope internal standard mixed solution in step 1);
4) collecting the raw mass spectrometry data of the metabolomics sample solution in step 3) and the relative quantitative standard curve correction solutions in a series of concentration gradients in step 2) by using the UPLC/HRMS;
5) acquiring primary mass spectrum transposed data and secondary mass spectrum transposed data based on the raw mass spectrometry data in step 4), and acquiring deconvolution results comprising a variety of primary variable information based on the primary mass spectrum transposed data;
6) combining the deconvolution results of the primary mass spectrum transposed data and the secondary mass spectrum transposed data in step 5), and referring to the primary variable information and secondary variable information of single isotope internal standard to identify the isotope internal standard, and selecting the optimal isotope internal standard for linear fitting;
7) performing linear fitting by using concentrations of the relative quantitative standard curve correction solutions in a series of concentration gradients in step 2) and the primary variable information acquired in step 5) to acquire a linear equation;
8) based on the linear equation in step 7), acquiring the relative quantitative results of the metabolomics sample solution in step 3), and completing principal component analysis and differential metabolites analysis of the primary variable information; and
9) completing identification of metabolites and identification of differential metabolites by combining the deconvolution results of the primary mass spectrum transposed data with the secondary mass spectrum transposed data in step 5).

2. The metabolomics relative quantitative analysis method according to claim 1, **characterized in that**
the isotope internal standard mixed solution in step 1) is formulated by the following method: firstly taking an appropriate amount of multiple isotope internal standards, and adding a solvent thereto, respectively, to formulate a given concentration of a mother solution of single isotope internal standard; and then taking an appropriate amount of each of the mother solutions of single isotope internal standard, respectively, mixing same, and adding a solvent thereto to acquire an isotope internal standard mixed solution.

3. The metabolomics relative quantitative analysis method according to claim 1, **characterized in that**
the metabolomics sample in step 2) is a serum or plasma sample, and the relative quantitative correction sample is NIST serum.

4. The metabolomics relative quantitative analysis method according to claim 1, **characterized in that**
the relative quantitative standard curve correction solutions in a series of concentration gradients in step 2) are formulated by the following method: taking a series of volumes of relative quantitative correction samples, adding an isotope internal standard and a protein precipitation reagent thereto, respectively, and mixing and centrifuging the mixture; taking the supernatant, and concentrating same; adding a reconstituted solvent to the residue, and mixing same; and taking the supernatant to acquire the relative quantitative standard curve correction solutions in a series of concentration gradients.

5. The metabolomics relative quantitative analysis method according to claim 1, **characterized in that**
the metabolomics sample solution in step 3) is formulated by the following method: taking a metabolomics sample, adding an isotope internal standard and a protein precipitation reagent thereto, respectively, and mixing and centrifuging the mixture; taking the supernatant, and concentrating same; adding a reconstituted solvent to the residue, and mixing same; and taking the supernatant to acquire the metabolomics sample solution.

6. The metabolomics relative quantitative analysis method according to claim 1, **characterized in that**
the primary mass spectrum transposed data and the secondary mass spectrum transposed data in step 5) are acquired by means of data transposition, and the data transposition is completed by a software or an algorithm platform.

7. The metabolomics relative quantitative analysis method according to claim 1, **characterized in that**
the deconvolution result in step 5) is acquired by means of deconvolution, and the deconvolution is completed by a software or an algorithm platform.

8. The metabolomics relative quantitative analysis method according to claim 1, **characterized in that**
the identification of the isotope internal standard and the selection of the optimal isotope internal standard in step 6) are completed by a self-developed algorithm.

9. The metabolomics relative quantitative analysis method according to claim 1, **characterized in that**
the principal component analysis in step 8) is completed by a self-adaptive conversion;
the differential metabolites analysis in step 8) is completed by a multivariate statistical analysis.

10. The metabolomics relative quantitative analysis method according to claim 1, **characterized in that**
the identification of metabolites and the identification of differential metabolites in step 9) are completed by a software or an algorithm platform.
